# FASCICULE DE BREVET EUROPEEN

(11) **EP 2 868 804 B1**
(45) Date de publication et mention de la délivrance du brevet: **24.06.2020**
(21) Numéro de dépôt: 14190481.3
(22) Date de dépôt: 27.10.2014
(51) Int. Cl.: E01D 19/16, F16F 15/02, F16F 9/00

(54) **DISPOSITIF D'AMORTISSEMENT DE VIBRATIONS DE CABLES D'UN SYSTEME DE SUSPENSION D'OUVRAGE D'ART**
VORRICHTUNG ZUM DÄMPFEN VON SCHWINGUNGEN VON DRAHTSEILEN EINES AUFHÄNGESYSTEMS EINES BAUWERKS
DEVICE FOR DAMPING VIBRATIONS OF CABLES IN A SUSPENSION SYSTEM OF AN ENGINEERING STRUCTURE

(30) Priorité: 31.10.2013 FR 1360709
(43) Date de publication de la demande: 06.05.2015
(73) Titulaire: Soletanche Freyssinet, 92500 Rueil Malmaison (FR)
(72) Inventeur: Stubler, Jérôme, 75016 Paris (FR); Mellier, Erik, 78000 Versailles (FR)
(74) Mandataire: Plasseraud IP

(56) Documents cités:
- EP-A1- 2 386 689
- FR-A1- 2 664 920
- JP-A- H10 317 320
- JP-A- H11 181 717
- JP-A- 2000 136 508
- JP-A- 2001 115 414

## Description

La présente invention concerne les techniques d'amortissement des vibrations que subissent les câbles utilisés pour suspendre des ouvrages d'art.

Elle s'applique notamment aux suspensions haubanées de ponts. Les haubans vibrent notamment à cause du vent et de la circulation des véhicules. Différents types de dispositif ont été proposés pour amortir ces vibrations.

Dans un premier type de dispositif d'amortissement (voir par exemple EP 0 343 054 A1, DE 295 17 250 U1 ou WO 98/04780 A1), l'énergie vibratoire est dissipée autour d'un câble individuel, dans une zone délimitée radialement par un élément fixé à la structure suspendue. Cet élément peut être un bras s'étendant entre le câble et la structure suspendue, ou encore un tube recevant la partie inférieure du câble.

D'autres dispositifs utilisent des amortisseurs à course linéaire tels que des pistons hydrauliques. Un ou plusieurs pistons peuvent être disposés sur un ou plusieurs bras reliant un câble individuel à la structure suspendue (voir par exemple JP 09-59921 A) ou entre le câble et un tube fixé à la structure suspendue et contenant la partie inférieure du câble (voir par exemple FR 2 859 260 A1 ou JP 06-58370 A).

Un dispositif d'amortissement dit pendulaire comporte un bras oscillant connecté au câble, dont les oscillations sont amorties par frottement visqueux. FR 2 664 920 A1 décrit un exemple d'un tel dispositif pendulaire.

Les dispositifs d'amortissement susmentionnés ont pour limitation de devoir être disposés à proximité de la structure suspendue, donc près de l'ancrage du câble, typiquement à une distance représentant de 1 à 3% de la longueur totale du câble.

FR 2 862 073 A1 décrit un autre type de dispositif d'amortissement qui relie le câble, non pas à un point fixe de la structure suspendue, mais à un câble voisin. Les haubans d'un pont à haubans étant généralement de longueur différente, ils possèdent tous des fréquences propres de vibration différentes. En conséquence, lors d'un épisode vibratoire, il y a toujours un mouvement relatif entre les câbles. Le dispositif d'amortissement selon FR 2 862 073 A1 tire parti de ce mouvement relatif pour dissiper de l'énergie. Le câble voisin représente alors un pseudo point fixe pour le câble vibrant.

Si ce pseudo point fixe est moins efficace qu'un point fixe réel tel que le tablier du pont à haubans, ces dispositifs sont tout de même d'une grande efficacité car ils peuvent être positionnés assez loin de l'ancrage du câble, typiquement 5 à 10% de la longueur totale.

Cependant, ce dispositif d'amortissement a pour limitation de n'agir que dans le plan des câbles qu'il relie, c'est-à-dire dans le plan de la nappe de haubans. Les mouvements hors du plan (transversaux) ne sont pas amortis efficacement.

Pour lutter contre les vibrations d'une nappe de haubans, une autre méthode consiste à mettre en place des câbles interconnectant les haubans, qui raidissent la nappe transversalement et empêchent les haubans d'adopter certains modes vibratoires. Si les câbles d'interconnexion peuvent être conçus pour apporter un amortissement des vibrations verticales pour compléter l'amortissement individuel appliqué au pied des haubans, ils restent quasiment sans effet sur les vibrations transversales.

D'autres dispositifs d'amortissement sont décrits par JP H10 317320 A, JP H11 181717 A et JP 2001 115414 A.

Un but de la présente invention est de proposer un dispositif d'amortissement des vibrations de câbles, tels que des haubans d'un pont qui soit d'une bonne efficacité en particulier pour l'amortissement de vibrations transversales.

La présente invention présente selon la revendication 1 en annexée, un dispositif d'amortissement de vibrations de câbles d'un système de suspension d'ouvrage d'art. Le dispositif d'amortissement comprend une structure d'interconnexion entre des câbles d'un groupe d'au moins trois câbles du système de suspension qui s'étendent sensiblement dans un même plan de suspension. La structure d'interconnexion présente, en dehors du plan de suspension, au moins un point d'appui d'au moins un élément dissipateur d'énergie disposé pour développer une force d'amortissement en réponse à un mouvement de l'un des câbles du groupe relativement aux autres câbles du groupe dans une direction perpendiculaire au plan de suspension.

Le dispositif offre la capacité d'amortir les vibrations transversales des câbles tout en ayant une liberté de positionnement de la structure d'interconnexion le long de ces câbles. On peut ainsi la placer à un endroit où l'amortissement sera efficace.

Le groupe de câbles reliés par la structure d'interconnexion se compose de trois câbles ou davantage. S'il y avait seulement deux câbles dans ce groupe, l'amortissement transversal ne serait pas efficace. Comme la structure interconnexion présente un certain encombrement transversal, il est préférable qu'elle ne couvre pas un nombre trop important de câbles, en raison du poids qu'elle risquerait d'avoir et également pour une question d'esthétique. Ainsi, le nombre préféré de câbles dans le groupe sera souvent de trois.

Dans une réalisation du dispositif d'amortissement, la structure d'interconnexion inclut au moins un amortisseur à course linéaire orienté transversalement au plan de suspension. On aura souvent plusieurs amortisseurs à course linéaire non parallèles entre eux dans la structure d'interconnexion.

Pour obtenir un écartement suffisant pour une action efficace du ou des éléments dissipateurs d'énergie, son point d'appui dans la structure d'interconnexion est de préférence situé à une distance du plan de suspension supérieure à un quarantième de l'espacement entre deux câbles adjacents du système de suspension au niveau de la structure d'interconnexion. Cette distance entre le point d'appui et le plan de suspension peut notamment être supérieure à un dixième de l'espacement entre câbles.

Dans une conception avantageuse du dispositif d'amortissement, la structure d'interconnexion est configurée pour admettre des déplacements de chaque câble du groupe perpendiculairement à lui-même dans le plan de suspension et hors du plan de suspension lorsque les positions des autres câbles du groupe sont fixées. Ceci évite de contraindre les trajectoires de câbles.

Dans une telle conception, on peut faire en sorte que chacun desdits déplacements actionne au moins un élément dissipateur d'énergie. Un même dispositif assure alors un amortissement des vibrations des câbles du groupe dans les différentes directions possibles.

On peut en outre prévoir que soit admis un mouvement des points de liaison de la structure d'interconnexion aux câbles parallèlement aux câbles, par exemple à cause des dilatations ou contractions des câbles lors de variations de température.

La structure d'interconnexion peut être portée par l'un au moins des câbles du groupe sans interposition d'éléments amortisseurs. En particulier, pour obtenir une bonne stabilité, la structure d'interconnexion peut être portée par un câble du groupe situé au-dessus du centre de gravité de la structure d'interconnexion, tel que le câble le plus haut du groupe.

Un autre aspect de la présente invention se rapporte à un pont à haubans, comprenant au moins un pylône, un tablier, au moins une nappe de haubans constitués de câbles s'étendant obliquement dans un plan de suspension entre un côté du pylône et le tablier pour suspendre le tablier, et au moins un dispositif d'amortissement tel que défini ci-dessus, monté sur un groupe d'au moins trois haubans de la nappe.

Tous les haubans à amortir, c'est-à-dire en général au moins les haubans les plus longs de la nappe appartiennent à au moins un groupe sur lequel est monté un dispositif d'amortissement. Il se peut que certains des haubans appartiennent à plusieurs groupes ayant chacun son dispositif d'amortissement respectif.

D'autres particularités et avantages de la présente invention apparaîtront dans la description ci-après d'exemples de réalisation non limitatifs, en référence aux dessins annexés, dans lesquels :
- la figure 1 est un schéma de profil d'un pont à haubans utilisant des dispositifs d'amortissement selon l'invention ;
- les figures 2 et 3 sont des schémas présentés pour illustrer le principe de fonctionnement d'un dispositif d'amortissement selon l'invention ;
- les figures 4 à 10 sont des vues en coupe schématique, suivant un plan perpendiculaire à la direction des haubans, d'exemples de dispositifs d'amortissement selon l'invention ; et
- les figures 11 et 12 sont des schémas de profil de ponts à haubans ayant d'autres agencements possibles de dispositifs d'amortissement.

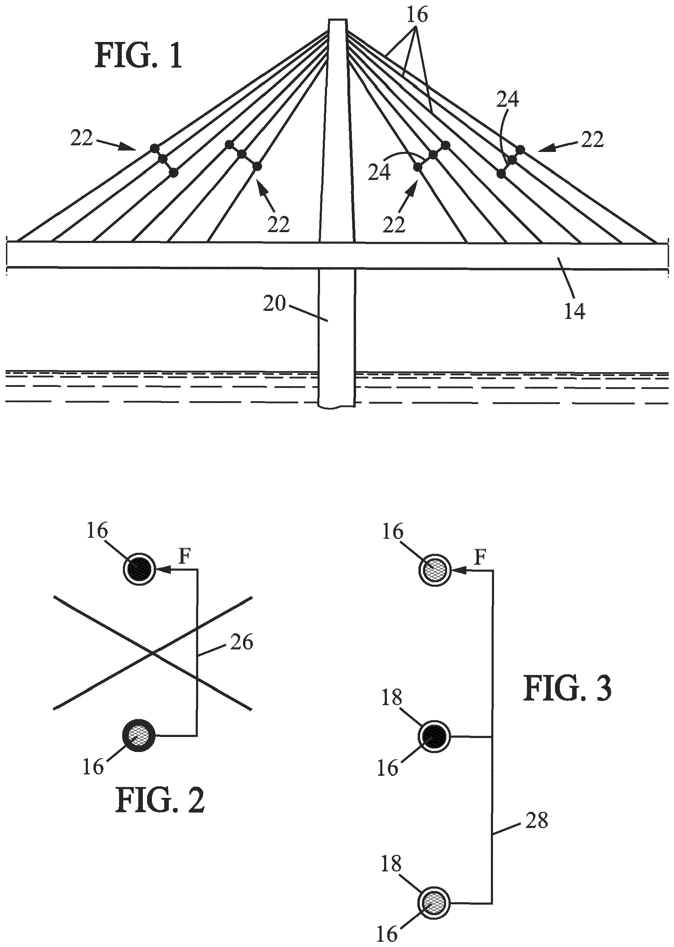

L'invention est décrite ci-après dans son application aux systèmes de suspension de ponts à haubans. Les câbles dont il s'agit d'amortir les vibrations sont alors les haubans 16 qui s'étendent entre un pylône 20 du pont et son tablier 14 pour suspendre le tablier 14 Dans l'illustration de la figure 1, il y a deux nappes de haubans 16 disposées symétriquement de part et d'autre du pylône 20. Dans la pratique toutefois, il y a très souvent une dissymétrie entre les deux côtés d'un pylône de pont à haubans.

La nappe de haubans 16 s'étend suivant un plan vertical ou légèrement incliné entre le pylône 20 et le tablier 14. Chaque hauban 16 a son extrémité basse ancrée sur le tablier 14 et son extrémité haute reliée au pylône 20 soit par un autre appareil d'ancrage, soit par une selle déviatrice.

Il est possible d'équiper tout ou partie des haubans 16, à proximité de leurs extrémités basses, de dispositifs d'amortissement individuel, non représentés, par exemple du genre décrit dans les publications mentionnées en introduction, ou encore dans la demande internationale de brevet français n° PCT/FR2014/052693.

Pour contribuer à l'amortissement de vibrations des haubans 16 d'une nappe, on équipe la nappe d'un ou plusieurs dispositifs 22 comprenant chacun une structure d'interconnexion 24 reliant entre eux plusieurs haubans adjacents.

Ces dispositifs 22 ont pour objet d'amortir les vibrations que subissent les haubans perpendiculairement à leur trajet en raison de déplacements relatifs de leurs ancrages, ou d'effets aérodynamiques. En particulier, il vise à amortir les vibrations des haubans 16 perpendiculairement au plan de la nappe.

L'amortissement transversal nécessite d'appliquer une force d'amortissement F sur le câble 16, hors du plan de la nappe, en prenant appui sur les autres câbles (figures 2 et 3). Fixer la structure d'interconnexion 24 sur un seul câble voisin 16 en comptant sur la rigidité en torsion de ce câble (figure 2) n'est ni efficace ni pratique à réaliser, car un câble est peu raide en torsion, et d'autre part il est souvent couvert par une gaine faiblement ou pas adhérente sur le câble.

Il convient donc que la structure d'interconnexion 24 prenne appui simplement, par exemple par un collier 18 libre en rotation mais fixe le long des câbles, sur au moins deux câbles voisins 16 (figure 3), de manière à créer un effet de rappel. Les deux câbles ayant des longueurs différentes et donc des fréquences propres transversales différentes, ils créent un pseudo encastrement pour le troisième câble à amortir transversalement.

Le dispositif d'amortissement 22 utilise donc une structure 24 qui relie entre eux au moins trois câbles, typiquement trois câbles adjacents de la nappe. Cette structure d'interconnexion 24 s'étend de manière significative en dehors du plan de la nappe pour présenter une certaine raideur structurelle transversale. Par significative on entend qu'un au moins des composants de la structure 24 autres que les colliers de connexion aux câbles est orienté hors du plan de la nappe.

La dimension transversale de la structure d'interconnexion 24 excède le vingtième de l'espacement minimum entre les câbles 16 du groupe de trois. Elle sera typiquement supérieure au cinquième de cet espacement.

La structure d'interconnexion 24 comprend à la fois des membrures structurelles rigides, typiquement des membrures en acier, et des éléments dissipateurs d'énergie, typiquement que des éléments frottants et/ou visqueux ou un ou plusieurs éléments structurels en matériau à fort amortissement interne.

Dans une réalisation représentative, un ou plusieurs pistons hydrauliques, à action symétrique ou asymétrique (voir EP 2 386 689 A1), sont utilisés comme éléments dissipateurs d'énergie à viscosité. Ces pistons peuvent éventuellement incorporer un ressort pour procurer un rappel élastique en plus de l'amortissement.

Pour supporter la gravité, la structure d'interconnexion 24 est portée par au moins un câble 16 du groupe de trois sans interposition d'éléments amortisseurs.

De manière à ne pas gêner les mouvements lents des câbles, notamment ceux dus aux variations thermiques, il est préférable que la structure d'interconnexion 24 ne lie pas rigidement deux câbles du groupe. Si elle est fixée rigidement entre deux câbles 16, l'espacement vertical entre ces deux câbles 16 est gelé et des déviations dont il serait préférable de se dispenser peuvent être imposées aux câbles.

Afin que la structure d'interconnexion 24 ait une bonne stabilité, le mode de fixation préféré est la suspension à un câble 16 situé au-dessus du centre de gravité de la structure. Ce sera typiquement le câble le plus haut du groupe.

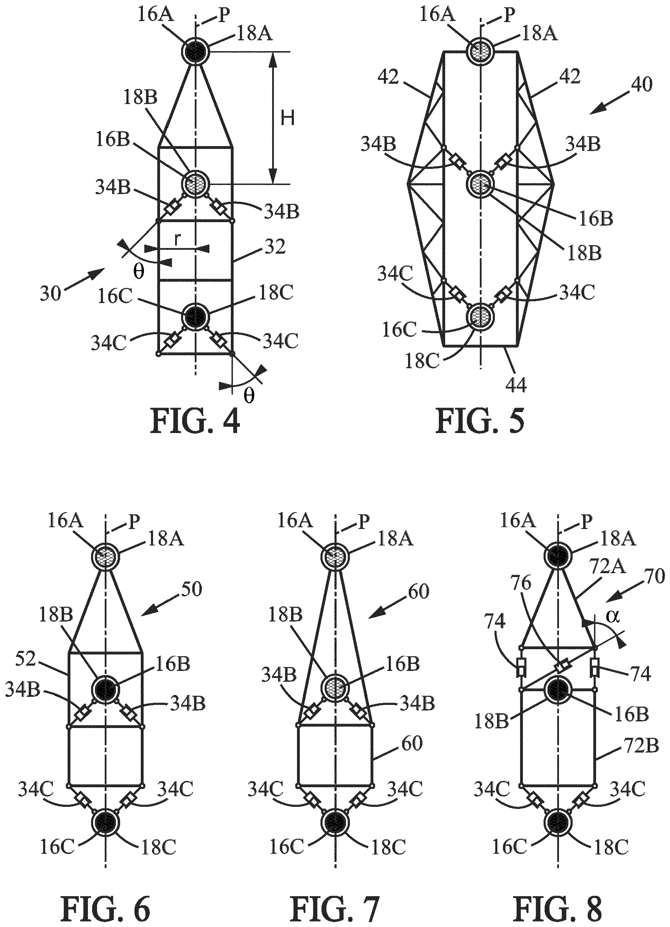

De nombreuses configurations de la structure d'interconnexion 24 sont possibles Les figures 4 à 10 en montrent schématiquement des exemples qui obéissent aux conditions suivantes :
- la structure d'interconnexion relie entre eux trois câbles ou plus ;
- elle est portée de manière stable, sans interposition d'éléments amortisseurs, par un câble au moins ;
- tout câble du groupe de câbles reliés entre eux a une capacité à se déplacer perpendiculairement à lui-même (c'est-à-dire dans le plan des figures 4 à 10), dans le plan P de la nappe et hors de ce plan P, lorsqu'on considère que les positions des autres câbles du groupe sont fixées ;
- ce mouvement de l'un des câbles relativement aux autres donne lieu à l'actionnement d'au moins un élément dissipateur d'énergie dans la structure d'interconnexion.

Dans les exemples des figures 4 à 10, les groupes sont composés de trois câbles adjacents de la nappe 16A, 16B, 16C. On notera que cela pourrait également être des câbles non adjacents. La fonction de porter la structure d'interconnexion est assurée par l'intermédiaire du collier 18A de fixation sur le câble supérieur 16A du groupe.

Dans l'exemple de la figure 4, la structure d'interconnexion 30 a une forme symétrique de part et d'autre du plan P de la nappe. Elle comprend un cadre rigide 32 suspendu au hauban supérieur 16A du groupe par son collier 18A. Chacun des deux autres haubans 16B, 16C du groupe est respectivement relié au cadre 32 par l'intermédiaire d'un collier 18B, 18C et d'une paire de pistons hydrauliques 34B, 34C.

Les pistons 34B, 34C sont disposées symétriquement de part et d'autre du plan P, et leur axe forme avec celui-ci un angle θ compris, au repos, entre 0° et 90°, par exemple θ ≈ 45°. Ils sont connectés de manière articulée d'un côté au collier 18B, 18C monté sur le hauban respectif 16B, 16C, et de l'autre en un point respectif du cadre 32 situé à une distance r du plan P. Cette distance r est typiquement inférieure à 1/40^{e} de l'espacement H entre deux haubans adjacents du groupe au niveau de la structure d'interconnexion 30. Pour obtenir une force d'amortissement F d'amplitude relativement importante transversalement à la nappe, il est avantageux que cette distance r soit supérieure à H/10.

Sur la figure 4, lorsque les haubans 16A et 16C sont fixes, les pistons de la paire 34B amortissent les vibrations du hauban 16B dans les deux directions. De même, lorsque les haubans 16A et 16B sont fixes, les pistons de la paire 34C amortissent les vibrations du hauban 16C dans les deux directions.

Lorsque les haubans 16B et 16C sont fixes, les vibrations verticales du hauban 16A sont amorties par la réponse conjointe des pistons 34B, 34C à l'allongement ou au rétrécissement, tandis que ses vibrations horizontales sont amorties de manière différentielle par les deux pistons de chaque paire 34B, 34C.

La figure 5 montre une variante du dispositif d'amortissement de la figure 4, dans laquelle le cadre de la structure d'interconnexion 40 comporte deux membrures renforcées 42 s'étendant parallèlement l'une à l'autre de part et d'autre du plan P de la nappe et perpendiculairement aux trois haubans du groupe. À leur extrémité supérieure, les deux membrures 42 sont connectées de manière rigide au collier 18A fixé sur le hauban supérieur 16A. Une barre 44 relie les deux membrures 42 en partie inférieure de la structure d'interconnexion 40.

Les paires de pistons hydrauliques sont disposées de façon semblable à celles de la figure 4, à cette exception près que les pistons 34B, 34C s'étendent vers le haut et non vers le bas depuis les haubans 16B, 16C auxquels ils sont respectivement reliés.

Les figures 6 et 7 montrent deux autres modes de réalisation de la structure d'interconnexion 50, 60, qui diffèrent de ceux des figures 4 et 5 par la forme du cadre 52, 62, l'agencement des éléments dissipateurs d'énergie 34B, 34C étant similaire.

Dans l'exemple de la figure 8, la structure d'interconnexion 70 comporte deux cadres rigides 72A, 72B respectivement suspendus aux câbles 16A, 16B. Deux pistons hydrauliques 74 disposés symétriquement par rapport au plan P de la nappe relient les deux cadres 72A, 72B l'un à l'autre. Un autre piston hydraulique 76 disposé transversalement relie le cadre supérieur 72A au cadre inférieur 72B. L'angle α entre l'axe de ce piston transversal 76 et le plan vertical P est par exemple de l'ordre de 60°.

Les vibrations du hauban intérieur 16C du groupe sont amorties par une paire de pistons hydrauliques 34C disposés à la partie inférieure du cadre 72B avec un agencement semblable à celui des figures 5 à 7. La composante verticale du mouvement relatif entre les haubans 16A et 16B est amortie essentiellement par l'effet des pistons 74, avec une contribution additionnelle du piston transversal 76. La composante horizontale du mouvement relatif entre les haubans 16A et 16B est amortie essentiellement par l'effet du piston transversal 76 avec une contribution additionnelle des pistons 74.

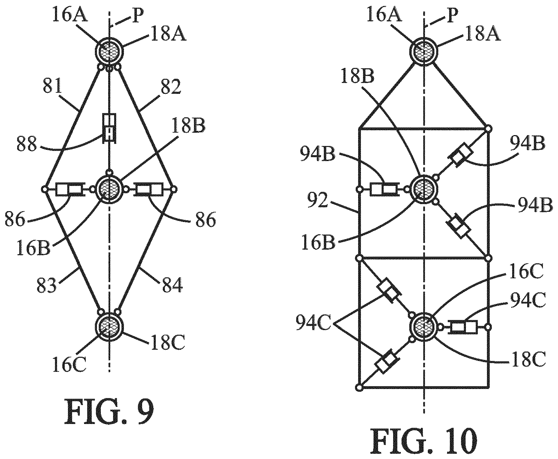

Dans l'exemple de réalisation de la figure 9, la structure d'interconnexion 80 comporte un assemblage de quatre bielles 81, 82, 83, 84 articulées en losange. Le point d'articulation entre les bielles supérieures 81, 82 est au niveau du collier 18A fixé sur le hauban supérieur 16A du groupe, tandis que le point d'articulation entre les bielles inférieures 83, 84 et au niveau du collier 18C fixé sur le hauban inférieur 16C. Aux deux autres points d'articulation de l'assemblage en losange sont en outre articulées les extrémités extérieures respectives de deux pistons hydrauliques 86, disposés symétriquement autour du plan P de la nappe, dont les extrémités opposées sont reliées au collier 18B fixé sur le hauban central 16B du groupe. Pour compléter la structure d'interconnexion 80, un troisième piston hydraulique 88 est monté de manière articulée entre les colliers 18A, 18B fixés sur les haubans 16A, 16B.

Dans cet exemple de réalisation, les déplacements verticaux relatifs du hauban central 16B actionnent l'amortisseur 88. Pour tous les autres déplacements, les bielles articulées 81, 82, 83, 84 déforment le losange et actionnent les pistons 86 au moins.

La figure 10 montre un autre exemple de dispositif d'amortissement, dans lequel la structure d'interconnexion 90 comporte un cadre rigide 92 suspendu au hauban supérieur 16A du groupe. Chacun des deux autres haubans du groupe est connecté au cadre 92 par l'intermédiaire de trois pistons hydrauliques respectifs 94B, 94C ayant des orientations différentes transversalement au plan P de la nappe.

En examinant les exemples des figures 4 à 10, on se rend compte que les agencements possibles de la structure d'interconnexion sont très nombreux. Ces exemples sont fournis à titre indicatif et nullement limitatif. Dans un cas concret, le concepteur du système de suspension de l'ouvrage dimensionnera les structures d'interconnexion et les éléments dissipateurs d'énergie en fonction du calcul général de la structure et des sollicitations auxquelles elle est appelée à être soumise. Les détails de réalisation de la structure d'interconnexion peuvent en outre être réglés en fonction de considérations esthétiques et aérodynamiques qui sortent du cadre du présent mémoire.

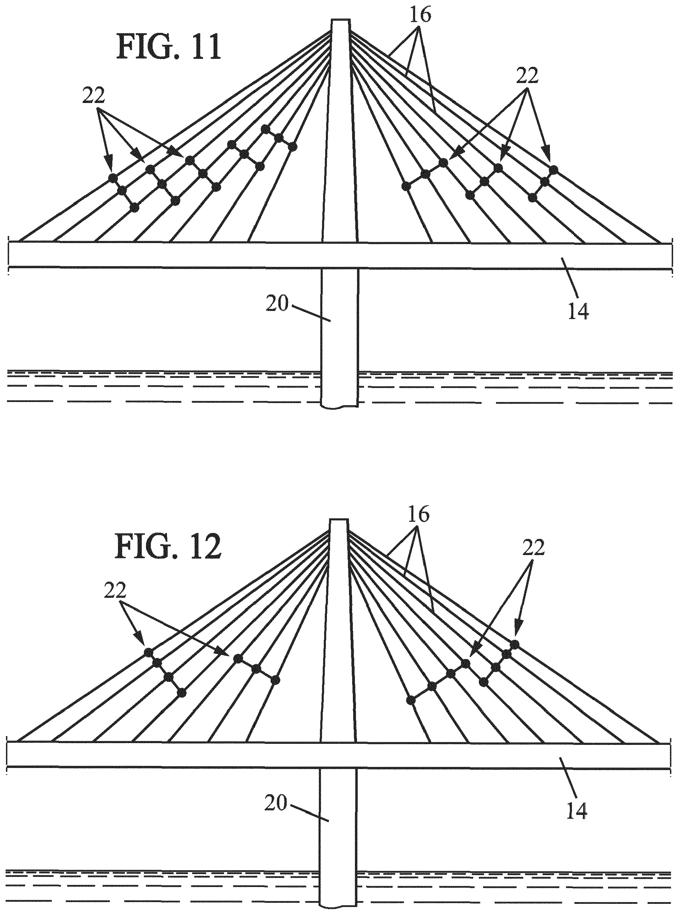

Les emplacements des dispositifs d'amortissement selon l'invention sur une nappe de haubans du système de suspension d'un ouvrage d'art peuvent également être très variés. C'est d'ailleurs un des avantages de la présente invention que d'offrir une grande souplesse dans l'agencement de tels dispositifs. Quelques variantes d'agencement sont illustrées sur les figures 11 et 12.

Sur la figure 11, les structures d'interconnexion des dispositifs d'amortissement 22 relient les haubans 16 trois par trois. Alors que, sur la figure 1, les groupes de haubans réunis par un dispositif d'amortissement 22 étaient constitués de haubans distincts, ces groupes présentent des recouvrements mutuels dans le cas de la figure 11. Certains des haubans 16 de la nappe appartiennent ainsi à plusieurs groupes. Sur la partie droite de la figure 11, les groupes adjacents partagent un hauban, tandis que sur la partie gauche, les groupes adjacents partagent deux haubans.

La figure 12 montre des nappes de haubans munis de dispositifs d'amortissement 22 réunissant plus de trois haubans 16.

Sur la partie droite de la figure 12, les groupes sont de quatre haubans, et les groupes adjacents partagent un hauban.

Dans la réalisation illustrée sur la partie gauche de la figure 12, il y a des dispositifs d'amortissement 22 pour des groupes de trois haubans et d'autres dispositifs 22 pour des groupes de quatre haubans.

La constitution des groupes de haubans 16 équipés de dispositif selon l'invention peut être très variée et, le long de ces haubans, les dispositifs d'amortissement 22 peuvent être placés à toute position désirée en fonction de la structure du pont et des sollicitations auxquelles il est soumis.

Les modes de réalisation décrits et évoqués ci-dessus sont des illustrations de la présente invention. Diverses modifications peuvent leur être apportées sans sortir du cadre de l'invention qui ressort des revendications annexées.

## Revendications

1. Dispositif d'amortissement de vibrations de câbles d'un système de suspension d'ouvrage d'art, le dispositif d'amortissement (22) comprenant une structure (24 ; 30 ; 40 ; 50 ; 60 ; 70 ; 80 ; 90) d'interconnexion entre des câbles (16 ; 16A-C) d'un groupe d'au moins trois câbles du système de suspension qui s'étendent sensiblement dans un même plan de suspension (P), dans lequel la structure d'interconnexion
comprend au moins un élément dissipateur d'énergie (34B-C ; 3, 76 ; 86, 88 ; 94B-C) disposé pour développer une force d'amortissement en réponse à un mouvement de l'un des câbles du groupe relativement aux autres câbles du groupe dans une direction perpendiculaire au plan de suspension, et la structure (24; 30; 40; 50; 60; 70; 80; 90) d'interconnexion présente, en dehors du plan de suspension, au moins un point d'appui pour l'élément dissipateur d'énergie (34B-C ; 74, 76 ; 86, 88 ; 94B-C).

2. Dispositif d'amortissement selon la revendication 1, dans lequel la structure d'interconnexion (24 ; 30 ; 40 ; 50 ; 60 ; 70 ; 80 ; 90) inclut au moins un amortisseur à course linéaire (34B-C ; 76 ; 86 ; 94B-C) orienté transversalement au plan de suspension (P).

3. Dispositif d'amortissement selon la revendication 1 ou la revendication 2, dans lequel la structure d'interconnexion (24 ; 30 ; 40 ; 50 ; 60 ; 70 ; 80 ; 90) comprend plusieurs amortisseurs à course linéaire (34B-C ; 74, 76 ; 86, 88 ; 94B-C) non parallèles entre eux.

4. Dispositif d'amortissement selon l'une quelconque des revendications précédentes, dans lequel la structure d'interconnexion (24 ; 30 ; 40 ; 50 ; 60 ; 70 ; 80 ; 90) inclut au moins un piston hydraulique (34B-C ; 74, 76 ; 86, 88 ; 94B-C).

5. Dispositif d'amortissement selon l'une quelconque des revendications précédentes, dans lequel ledit point d'appui est situé à une distance (r) du plan de suspension (P) supérieure à un quarantième de l'espacement (H) entre deux câbles adjacents (16) du système de suspension au niveau de la structure d'interconnexion (24 ; 30 ; 40 ; 50 ; 60 ; 70 ; 80 ; 90).

6. Dispositif d'amortissement selon la revendication 5, dans lequel la distance (r) entre le point d'appui et le plan de suspension (P) est supérieure à un dixième dudit espacement (H).

7. Dispositif d'amortissement selon l'une quelconque des revendications précédentes, dans lequel la structure d'interconnexion (24 ; 30 ; 40 ; 50 ; 60 ; 70 ; 80 ; 90) est configurée pour admettre des déplacements de chaque câble (16 ; 16A-C) du groupe perpendiculairement à lui-même dans le plan de suspension (P) et hors du plan de suspension lorsque les positions des autres câbles du groupe sont fixées.

8. Dispositif d'amortissement selon la revendication 7, dans lequel chacun desdits déplacements actionne au moins un élément dissipateur d'énergie (34B-C ; 74, 76 ; 86, 88 ; 94B-C).

9. Dispositif d'amortissement selon l'une quelconque des revendications précédentes, dans lequel la structure d'interconnexion (24 ; 30 ; 40 ; 50 ; 60 ; 70 ; 80 ; 90) est portée par l'un au moins des câbles (16A) du groupe sans interposition d'éléments amortisseurs.

10. Dispositif d'amortissement selon la revendication 9, dans lequel la structure d'interconnexion est portée par un câble du groupe situé au-dessus du centre de gravité de la structure d'interconnexion, de préférence par le câble (16A) le plus haut du groupe.

11. Dispositif d'amortissement selon l'une quelconque des revendications précédentes, dans lequel ledit groupe de câbles (16 ; 16A-C) se compose d'exactement trois câbles.

12. Pont à haubans, comprenant au moins un pylône (20), un tablier (14), au moins une nappe de haubans (16) constitués de câbles s'étendant obliquement dans un plan de suspension entre un côté du pylône et le tablier pour suspendre le tablier, et au moins un dispositif d'amortissement (22) selon l'une quelconque des revendications précédentes monté sur un groupe d'au moins trois câbles de la nappe.

13. Pont à haubans selon la revendication 12, dans lequel au moins les câbles les plus longs de la nappe appartiennent à au moins un groupe sur lequel est monté un dispositif d'amortissement (22).

14. Pont à haubans selon la revendication 12 ou la revendication 13, dans lequel au moins un des haubans (16) de la nappe appartient à plusieurs groupes, un dispositif d'amortissement respectif (22) étant monté sur chacun desdits groupes.

## Patentansprüche

1. Vorrichtung zum Dämpfen von Schwingungen von Drahtseilen eines Aufhängesystems eines Bauwerks, wobei die Dämpfungsvorrichtung (22) eine Verbindungsstruktur (24; 30; 40; 50; 60; 70; 80; 90) aufweist, die Drahtseile (16; 16A-C) einer Gruppe von mindestens drei Drahtseilen des Aufhängesystems, die sich im Wesentlichen in einer gleichen Aufhängungsebene (P) erstrecken, miteinander verbindet, wobei die Verbindungsstruktur mindestens ein Energiedissipationselement (34B-C; 3; 76; 86, 88; 94B-C) aufweist, das angeordnet ist, um als Antwort auf eine Bewegung eines der Drahtseile der Gruppe relativ zu den anderen Drahtseilen der Gruppe in einer zur Aufhängungsebene senkrechten Richtung eine Dämpfungskraft zu entfalten, und wobei die Verbindungsstruktur (24; 30; 40; 50; 60; 70; 80; 90) außerhalb der Aufhängungsebene mindestens einen Lagerungspunkt für das Energiedissipationselement (34B-C; 74, 76; 86, 88; 94B-C) aufweist.

2. Dämpfungsvorrichtung nach Anspruch 1, in welcher die Verbindungsstruktur (24; 30; 40; 50; 60; 70; 80; 90) mindestens einen transversal zur Aufhängungsebene (P) orientierten Dämpfer (34B-C; 76; 86; 94B-C) mit linearem Hub aufweist.

3. Dämpfungsvorrichtung nach Anspruch 1 oder Anspruch 2, in welcher die Verbindungsstruktur (24; 30; 40; 50; 60; 70; 80; 90) mehrere Dämpfer mit linearem Hub (34B-C; 74, 76; 86, 88; 94B-C) aufweist, die untereinander nicht parallel sind.

4. Dämpfungsvorrichtung nach einem der vorstehenden Ansprüche, in welcher die Verbindungsstruktur (24; 30; 40; 50; 60; 70; 80; 90) mindestens einen Hydraulikkolben (34B-C; 74, 76; 86, 88; 94B-C) aufweist.

5. Dämpfungsvorrichtung nach einem der vorstehenden Ansprüche, in welcher der Lagerungspunkt in einem Abstand (r) von der Aufhängungsebene (P) angeordnet ist, der größer als ein Vierzigstels des Zwischenraums (H) zwischen zwei benachbarten Drahtseilen (16) des Aufhängesystems im Bereich der Verbindungsstruktur (24; 30; 40; 50; 60; 70; 80; 90) ist.

6. Dämpfungsvorrichtung nach Anspruch 5, in welcher der Abstand (r) zwischen dem Lagerungspunkt (P) und der Aufhängungsebene (P) größer als ein Zehntel des Zwischenraums (H) ist.

7. Dämpfungsvorrichtung nach einem der vorstehenden Ansprüche, in welcher die Verbindungsstruktur (24; 30; 40; 50; 60; 70; 80; 90) konfiguriert ist, Verschiebungen jedes Drahtseils (16; 16A-C) der Gruppe senkrecht zu sich selbst in der Aufhängungsebene (P) und außerhalb der Aufhängungsebene zu erlauben, wenn die Positionen der anderen Drahtseile der Gruppe fest sind.

8. Dämpfungsvorrichtung nach Anspruch 7, in welcher jede der Verschiebungen mindestens ein Energiedissipationselement (34B-C; 74, 76; 86, 88; 94B-C) aktiviert.

9. Dämpfungsvorrichtung nach einem der vorstehenden Ansprüche, in welcher die Verbindungsstruktur (24; 30; 40; 50; 60; 70; 80; 90) zumindest von einem der Drahtseile (16A) der Gruppe ohne dazwischenliegende Dämpfungselemente getragen wird.

10. Dämpfungsvorrichtung nach Anspruch 9, in welcher die Verbindungsstruktur von einem Drahtseil der Gruppe, das sich oberhalb des Schwerpunktzentrums der Verbindungsstruktur befindet, bevorzugt von dem höchsten Drahtseil (16A) der Gruppe, getragen wird.

11. Dämpfungsvorrichtung nach einem der vorstehenden Ansprüche, in welcher die Gruppe von Drahtseilen (16; 16A-C) genau aus drei Drahtseilen besteht.

12. Schrägseilbrücke, aufweisend mindestens einen Pylon (20), eine Fahrbahnfläche (14), mindestens eine flächige Anordnung von Schrägseilen (16), die aus Drahtseilen besteht, die sich schräg in einer Aufhängungsebene zwischen einer Seite des Pylon und der Fahrbahnfläche erstrecken, um die Fahrbahnfläche aufzuhängen, und mindestens eine Dämpfungsvorrichtung nach einem der vorstehenden Ansprüche, die an einer Gruppe von mindestens drei Drahtseilen der Anordnung angebracht ist.

13. Schrägseilbrücke nach Anspruch 12, in welcher zumindest die längsten Drahtseile der Anordnung mindestens einer Gruppe angehören, an der eine Dämpfungsvorrichtung (22) angebracht ist.

14. Schrägseilbrücke nach Anspruch 12 oder Anspruch 13, in welcher mindestens eines der Schrägseile (16) der Anordnung mehreren Gruppen angehört, wobei eine jeweilige Dämpfungsvorrichtung (22) an jeder der Gruppen angebracht ist.

## Claims

1. A device for damping vibrations in cables of a suspension system of a civil engineering structure, the damping device (22) comprising an interconnecting structure (24; 30; 40; 50; 60; 70; 80; 90) between cables (16; 16A-C) of a group of at least three cables of the suspension system which extend substantially in a common suspension plane (P), wherein the interconnecting structure
comprises at least one an energy dissipating element (34B-C; 74, 76; 86, 88; 94B-C) arranged so as to develop a damping force in response to movement of one of the cables of the group relative to the other cables of the group in a direction perpendicular to the suspension plane, and
the interconnecting structure (24; 30; 40; 50; 60; 70; 80; 90) has, outside the suspension plane, at least one bearing point for the energy dissipating element (34B-C; 74, 76; 86, 88; 94B-C).

2. The damping device as claimed in Claim 1, wherein the interconnecting structure (24; 30; 40; 50; 60; 70; 80; 90) includes at least one linear-stroke damper (34B-C; 76; 86; 94B-C) oriented transversely to the suspension plane (P).

3. The damping device as claimed in Claim 1 or Claim 2, wherein the interconnecting structure (24; 30; 40; 50; 60; 70; 80; 90) comprises a plurality of linear-stroke dampers (34B-C; 74, 76; 86, 88; 94B-C) that are not mutually parallel.

4. The damping device as claimed in any one of the preceding claims, wherein the interconnecting structure (24; 30; 40; 50; 60; 70; 80; 90) includes at least one hydraulic cylinder (34B-C; 74, 76; 86, 88; 94B-C).

5. The damping device as claimed in any one of the preceding claims, wherein said bearing point is located at a distance (r) from the suspension plane (P) of greater than one fortieth of the spacing (H) between two adjacent cables (16) of the suspension system at the level of the interconnecting structure (24; 30; 40; 50; 60; 70; 80; 90).

6. The damping device as claimed in Claim 5, wherein the distance (r) between the bearing point and the suspension plane (P) is greater than one tenth of said spacing (H).

7. The damping device as claimed in any one of the preceding claims, wherein the interconnecting structure (24; 30; 40; 50; 60; 70; 80; 90) is configured to allow displacements of each cable (16; 16A-C) of the group perpendicularly to itself in the suspension plane (P) and out of the suspension plane when the positions of the other cables of the groups are fixed.

8. The damping device as claimed in Claim 7, wherein each of said displacements actuates at least one energy dissipating element (34B-C; 74, 76; 86, 88; 94B-C).

9. The damping device as claimed in any one of the preceding claims, wherein the interconnecting structure (24; 30; 40; 50; 60; 70; 80; 90) is carried by at least one of the cables (16A) of the group without damping elements being interposed.

10. The damping device as claimed in Claim 9, wherein the interconnecting structure is carried by a cable of the group that is located above the centre of gravity of the interconnecting structure, preferably by the highest cable (16A) of the group.

11. The damping device as claimed in any one of the preceding claims, wherein said group of cables (16; 16A-C) is made up of exactly three cables.

12. A cable-stayed bridge, comprising at least one tower (20), a deck (14), at least one set of stays (16) consisting of cables extending obliquely in a suspension plane between one side of the tower and the deck in order to suspend the deck, and at least one damping device (22) as claimed in any one of the preceding claims, fitted on a group of at least three cables of the set.

13. The cable-stayed bridge as claimed in Claim 12, wherein at least the longest cables of the set belong to at least one group on which a damping device (22) is fitted.

14. The cable-stayed bridge as claimed in Claim 12 or Claim 13, wherein at least one of the stays (16) of the set belongs to a plurality of groups, one damping device (22) being fitted on each of said groups.
